Europäisches Patentamt

European Patent Office

Office européen des brevets

(11) Publication number: **0 137 545**
**B1**

# EUROPEAN PATENT SPECIFICATION

(45) Date of publication of patent specification: **01.07.87**

(21) Application number: **84201298.1**

(22) Date of filing: **10.09.84**

(51) Int. Cl.⁴: **C 08 L 71/04, C 08 J 7/04,**
**C 08 J 5/12 // (C08L71/04,**
**63:00)**

(54) Articles manufactured wholly or partly from a polymer mixture and comprising a lacquer layer or an adhesive layer.

(30) Priority: **12.10.83 NL 8303497**

(43) Date of publication of application:
**17.04.85 Bulletin 85/16**

(45) Publication of the grant of the patent:
**01.07.87 Bulletin 87/27**

(84) Designated Contracting States:
**DE FR GB IT NL**

(56) References cited:
FR-A-2 293 892
GB-A-1 561 140
GB-A-1 562 540

CHEMICAL ABSTRACTS, vol. 81, 1974, page 75,
no. 122066u, NEW YORK (US)

(73) Proprietor: **GENERAL ELECTRIC COMPANY**
**1 River Road**
**Schenectady New York 12305 (US)**

(72) Inventor: **van der Meer, Roelof**
**General Electric Plastics B.V. P.O. Box 117**
**NL-4600 AC Bergen op Zoom (NL)**

(74) Representative: **Grever, Frederik**
**General Electric Plastics B.V. P.O. Box 117**
**NL-4600 AC Bergen op Zoom (NL)**

Courier Press, Leamington Spa, England.

## Description

The invention relates to an article from a polymer mixture which comprises a polyphenylene ether, optionally a polystyrene or a rubber-modified polystyrene, and is provided with a lacquer layer on an adhesive layer.

Articles manufactured from a polyphenylene ether and having a polyurethane lacquer layer are known from FR—A—2 293 892. The known articles are manufactured from a polyphenylene ether without any further additions. In such articles a good adhesion between the polyurethane lacquer or adhesive layer is of importance.

The invention provides articles having a good adhesion between the lacquer layer or adhesive layer and the actual article.

In particular, the invention provides articles having a lacquer layer on the basis of a polyurethane or an alkyd/melamine resin or having a polyurethane- or epoxy adhesive layer.

The article according to the invention is characterized in that it is manufactured from a polymer mixture comprising a polyphenylene ether and an epoxy compound.

The articles according to the invention are preferably manufactured from a polymer mixture which, calculated with respect to the overall quantity of polyphenylene ether, optionally present polystyrene or rubber-modified polystyrene, optionally present block copolymer, comprises 0.2 to 7.5% by weight of epoxy compound and 0 to 25% by weight of block copolymer.

Polymer mixtures comprising a polyphenylene ether, optionally a polystyrene or a rubber-modified polystyrene and an epoxy compound, are known per se from JP—A—45/120514 laid. open to public inspection under No. 48/39017.

Chemical Abstract, Vol. 81, no. 20, November 1974, number 122,066 u describes an adhesive composition containing poly(phenylene oxide) and an epoxy resin having good adhesion to copper foils. The composition is adhered to the copper foil at elevated temperature (300°C) and pressure (50—100 kg/cm³).

It is furthermore known from DE—A—30 39201 that the adhesion of polyurethane foam to articles formed from a polyphenylene ether-polystyrene mixture can be improved by the addition of a special impact-proof modified polystyrene as described in DE—A—25 25 019.

A good adhesion with lacquers and adhesives can be obtained when the article is manufactured from a polymer mixture which in addition comprises a block copolymer having blocks derived from a conjugated diene and from a vinyl aromatic compound. This applies in particular to the adhesion with lacquers, for example, polyurethane lacquers and alkyd/melamine lacquers.

The articles according to the invention are manufactured from a polymer mixture comprising the following constituents:

A. a polyphenylene ether;

B. an epoxy compound.

This polymer mixture may furthermore comprise:

C. a saturated or unsaturated block copolymer;

D. a polystyrene or a rubber-modified polystyrene;

E. usual additives for polymer mixtures comprising a polyphenylene ether.

A. Polyphenylene ether.

Polyphenylene ethers and their preparations are described in numerous patent publications, for example, in US—A—3 306 874; US—A—3 306 875; US—A—3 257 357 and US—A—3 257 358. The polymer mixture according to the invention may comprise one or more of all the known polyphenylene ethers, notable also homopolymers, copolymers and graft copolymers. The polyphenylene ether in the polymer mixtures according to the invention preferably comprises units derived from 2,6-dimethylphenol.

B. Epoxy compound.

The following compounds may be used as an epoxy compound:

(1) Epoxide resins which are prepared by condensing phenols having two or more OH-groups with epichlorohydrin in various ratios.

(2) Epoxide resins which are prepared by condensing alcohols having two or more OH-groups (=poly alcohols) with epichlorohydrin.

(3) Glycidyl ethers derived from phenols or alcohols having one OH-group.

(4) Glycidyl ethers derived from amine compounds.

(5) Epoxidized higher olefins or cycloalkanes.

Typical examples of epoxide resins mentioned B (1) are the condensation products of bisphenol A or bisphenol F with epichlorohydrin (for example, Araldit GT 7071, Araldit GY 266 and Araldit GT6099 of Ciba Geigy), condensation products of resorcinol and epichlorohydrin, condensates of tetrabromobisphenol A and epichlorohydrin and the glycidyl ether products of phenol Novolak or kresol Novolak, for example Ciba EPN 138 of Ciba Geigy. Condensates of phenols having two OH-groups and epichlorohydrin having a reasonably high molecular weight, for example the phenoxy resins produced by Union Carbide Corp., may also be used.

As examples of the epoxide resins mentioned B (2) may be stated the condensates of ethylene glycol, propylene glycol, butylene glycol, polyethylene glycol, glycerin, trimethylol ethane, trimethylol propane, or pentaerythritol with epichlorohydrin.

As examples of the glycidyl ether products B (3) may be mentioned phenyl glycidyl ether, n-butyl glycidyl ether, cresyl glycidyl ether, and 2-ethylhexyl glycidyl ether.

As an example for B (4) is mentioned a diglycidyl ether derived from aniline.

As an example of the compounds mentioned B (5) may be stated epoxidized unsaturated oils, for example, soya bean oil and linseed oil (Edenol D 81 and Edenol B 316, respectively, of Henkel).

Due to the small plasticizing effect in polymer mixtures comprising a polyphenylene ether, epoxy resins having a molecular weight of more than 1,000 are preferably used.

C. Saturated or unsaturated block copolymer.

Block copolymers which may be used in the polymer mixtures: block copolymers of the type A—B, A—B—A' or also radial teleblock copolymers and so-called tapered block copolymers, i.e. block copolymers in which copolymers of the conjugated diene and the vinyl aromatic compound are present between the blocks. The block built up from the conjugated diene in all the types of block copolymers considered here may be fully or partly hydrogenated, in which case saturated block copolymers are obtained. In the block copolymers A—B and A—B—A', B consists of a block of a conjugated diene, for example, butadiene, isoprene or pentadiene-1,3, and blocks A and A' consist of vinyl aromates, for example, styrene, alpha-methylstyrene, vinyl toluene, vinyl xylene and/or vinyl naphthalene. B preferably consists of polybutadiene and A and A' preferably consist of polystyrene. Radial teleblock copolymers are to be understood to mean branched polymers having blocks which are formed by a polymer of a conjugated diene, preferably butadiene, blocks of a vinyl aromatic compound, preferably styrene and a coupling agent. In this copolymer structure, various chains of the diene polymer, usually three or more, start from a coupling agent in which each chain at its other end comprises a block of the aromatic vinylpolymer. All the said block copolymers are known per se.

D. Polystyrene or rubber-modified polystyrene.

As a polystyrene there may be used a compound which contains more than 25% of units of a compound of the formula $R—C(C_6H_{(5-p)}Z_p)=CH_2$, wherein R is a hydrogen atom, a lower alkyl group (having, for example, 1—6 carbon atoms) or a halogen atom, Z is a hydrogen atom or a chlorine atom or a lower alkyl group or a vinyl group and p=0 or an integer from 1 to 5.

Suitable polystyrene compounds and suitable rubber-modified polystyrene compounds (high-impact polystyrene) are homopolymers, for example, polystyrene itself, polychlorostyrene and poly-alpha-methyl styrene, rubber-modified polystyrenes, for example, the commercially available high-impact polystyrene polymers and also the styrene-containing copolymers, for example, styrene acrylonitrile copolymers, styrene butadiene copolymers, styrene acrylonitrile-butadiene terpolymers, copolymers of ethylvinylbenzene and divinylbenzene and the like.

When the polymer mixture includes a polystyrene or a rubber-modified polystyrene, the ratio between the quantity by weight of polyphenylene ether and polystyrene may be varied within wide limits, for example, between 1:4 and 20:1.

E. Usual additives for polymer mixtures of polyphenylene ether.

Examples of usual additives are dyes and pigments, agents to make the polymer mixture antistatic, agents to give the polymer mixture better flame-retarding properties, stabilizers, fillers, reinforcing fibres and mineral oil.

The articles according to the invention are manufactured according to usual techniques of processing synthetic resins, for example, by injection moulding, extrusion and the like. Layers of lacquer or adhesive on the basis of a polyurethane may be provided on the articles. Lacquers on the basis of an alkyd/melamine system or epoxy adhesives may also be provided.

Polyurethane lacquers or adhesives are to be understood to mean lacquers or adhesives which comprise urethane groups in the ultimate protective layer or in the ultimately formed compound. Urethane groups are formed by the reaction of an active hydrogen atom of a hydroxyl group with an isocyanate group.

In most cases a polyurethane lacquer or adhesive consists of two components which are mixed with each other immediately before use. The two components are usually a prepolymer with isocyanate end groups and a resin with reactive OH-groups. In Verfkroniek, *43* (1970), p. 269—276 are mentioned as examples of suitable reactive resins:

    a. polyacrylate-polyol
    b. polyester-polyol
    c. polyether-polyol

The OH-value of the lacquer or adhesive determines the ultimate degree of cross-linking of the lacquer or adhesive. The lacquer or adhesive usually comprises one or more of the following solvents: ethyl acetate, butyl acetate, toluene and xylene.

Alkyd/melamine lacquers are baking enamels. By raising the temperature (baking), curing takes place. The two components, on the one hand the alkyd resin with free carboxyl groups and on the other hand the melamine resin with free OH-groups, are supplied as one system.

Suitable epoxy adhesives are two-components systems which are mixed immediately before use. The main component is an epoxy resin having a given epoxy equivalent number, while the second component, "the hardener", ensures curing by reaction with the epoxy group.

In the examples hereinafter, thin, disk-shaped plates are formed by injection moulding from the polymer mixtures mentioned therein. Lacquer layers and/or adhesive layers on the basis of a polyurethane are provided on said plates. The bonding between the polyurethane lacquer layer—if not otherwise stated—is determined according to the so-called "Gitterschnittprüfung von Anstrichen und ähnlichen Beschichtungen" (cross-cut test on paint coatings and similar coatings) according to DIN 53 151. The tests have been carried out with an Ericsen type 295 testing apparatus. By means of said testing apparatus, a pattern of squares is scratched in the coating layer. An adhesive tape is adhered across said pattern; the tape is thoroughly pressed on. The adhesive tape is then pulled off. The appearance of the square pattern is then evaluated visually. With an evaluation Gt0 the coating layer is still fully intact. With an evaluation Gt5 more than 65% of the surface of the diamond pattern has worked loose. With intermediate evaluations Gt1, Gt2, Gt3, Gt4 a result getting worse and worse in this sequence is obtained.

The bonding of the adhesive layer is determined as follows. A standardized tensile test bar is manufactured from the polymer mixtures by injection moulding. A PVC-foil is adhered to the tensile test bar by means of adhesive (example III). The adhesive is cured. The peel resistance is then determined (N/mm). The peel resistance is defined as the average force per length unit of the bonding line to further pull apart the two parts bonded together once the peeling has started. For this method of determining the peel resistance there may be referred to International Standard ISO 4578-1979 (E) and to DIN 53 282. In Example IV the bonding of the adhesive is determined by adhering two tensile test bars together with an overlap of 1 cm. The force necessary to slide the tensile test bars parallel to each other is then measured as the peel resistance $(N/mm^2)$.

Example I

Polymer mixtures were prepared (samples A, B and C) having a composition as stated in Table I hereinafter. From these mixtures, thin disc-shaped plates were manufactured by injection moulding. The plates were lacquered under different conditions with three commercially available polyurethane lacquers by means of a spray gun. The bonding between the plates and the lacquer layer was determined after seven days according to the "Gitterschnittprüfung" (cross-cut test) (DIN 53151). The lacquer conditions and the results obtained are recorded in Tables II, III, IV, V and VI herein after. The tests were always carried out in quintuplicate.

TABLE I

| Sample | (composition parts by weight) | | |
| --- | --- | --- | --- |
| | A | B | C |
| Poly(2,6-dimethyl-1,4-phenylene ether) | 44 | 40 | 53 |
| High-impact polystyrene | 56 | 51 | 38 |
| ZnO+ZnS | 0.3 | 0.3 | 0.3 |
| Organic phosphite | 0.7 | 0.7 | 0.7 |
| Block copolymer[1] | — | 6.5 | 6.5 |
| Epoxy compound[2] | — | 2.5 | 2.5 |

[1] a block copolymer of the type A—B—A', wherein A and A' are polystyrene blocks and B is a non-hydrogenated polybutadiene block, obtainable under the trademark Cariflex TRKX-65
[2] an epoxy compound in the form of a solid epoxide resin on the basis of bisphenol A, obtainable under the trademark Araldit GT 7071.

## TABLE II
Conditions upon spraying the polyurethane lacquer.
— distance spray gun-substrate     0.3 m
— pressure in spray gun     0.3 megapascal (MPa)
— temperature substrate     30°C
— curing lacquer     30 minutes at 80°C

Results:

| Sample | Lacquer I[3] | Lacquer II[4] |
|--------|--------------|---------------|
| A | 1×GT4; 4×Gt0 | 5×Gt0 |
| B | 5×Gt0 | 5×Gt0 |
| C | 5×Gt0 | 5×Gt0 |

[3] and [4] see note below Table VI

## TABLE III
Conditions upon spraying the polyurethane lacquer
— distance spray gun-substrate     0.6 m
— pressure in spray gun     0.4 megapascal (MPa)
— temperature substrate     30°C
— curing lacquer     30 minutes at 80°C

Results:

| Sample | Lacquer I[3] | Lacquer II[4] |
|--------|--------------|---------------|
| A | 5×Gt4 | 1×Gt2; 4×Gt0 |
| B | 5×Gt0 | 5×Gt0 |
| C | 5×Gt0 | 5×Gt0 |

[3] and [4] see note below Table VI

## TABLE IV
Conditions upon spraying the polyurethane lacquer
— distance spray gun-substrate     0.6 m
— pressure in spray gun     0.4 megapascal (MPa)
— temperature substrate     20°C
— curing lacquer     30 minutes at 80°C

Results:

| Sample | Lacquer I[3] | Lacquer II[4] |
|--------|--------------|---------------|
| A | 5×Gt4 | 4×Gt2 |
| B | 5×Gt4 | 5×Gt0 |
| C | 5×Gt4 | 5×Gt0 |

[3] and [4] see note below Table VI

## TABLE V
Conditions upon spraying the polyurethane lacquer as in Example IV, with the exception of:
    — curing lacquer     30 minutes at 120°C

Results:

| Sample | Lacquer I[3] |
|--------|--------------|
| A | 5×Gt0 |
| B | 5×Gt0 |
| C | 5×Gt0 |

[3] see note below Table VI

# 0 137 545

## TABLE VI
### Conditions upon spraying the polyurethane lacquer

| | |
|---|---|
| — distance spray gun-substrate | 0.6 m |
| — pressure in spray gun | 0.6 megapascal (MPa) |
| — temperature substrate | 35°C |
| — curing lacquer | 30 minutes at 80°C |

Results:

| Sample | Lacquer I[3] | Lacquer II[4] |
|---|---|---|
| A | 5×Gt4 | 4×Gt2/3; 1×Gt0 |
| B | 5×Gt4 | 5×Gt0 |
| C | 5×Gt4 | 5×Gt0 |

[3] Lacquer I is a two components polyacrylate-polyol/isocyanate having an OH-value of 4%, commercially available as "Autocryl" from Messrs. Sikkens.

[4] Lacquer II is a two components polyacrylate-polyol/isocyanate lacquer having an OH-value of 4%, commercially available as "Cellioster 1834" from Messrs. La Celliose.

It appears from the Tables that the conditions upon spraying the lacquers are of importance for the resulting bonding. In practice, however, it is of essential importance that a good bonding should also be obtained in less optimum conditions.

It appears from the Tables that with the samples B and C according to the invention a better or equal result is obtained as with sample A (reference sample).

Example II.

Two polymer mixtures were prepared corresponding to samples A and B of Table I. Disk-shaped plates were manufactured from the polymer mixture by means of injection moulding. The plates were lacquered with a polyurethane lacquer under different conditions. As a polyurethane lacquer was used a two-components polyacrylatepolyol/isocyanate lacquer obtainable as "Cellioster 2400 Alu Nacre 3387 HU" from La Celliose.

All experiments were carried out in quintuplicate. The bonding strength was determined according to the "Gitterschnitt" test. Moreover the impact strength prior to and after painting was determined according to the so-called "falling dart impact" test (thickness disk 3.2 mm; falling height 2.15 m; mass 10.378 kg). The results are recorded in Table VII.

6

TABLE VII

| | Sample A | Sample B |
|---|---|---|
| Properties before painting "Falling dart impact strength" (J) | 60 | 95 |
| Condition used upon spraying the poly-urethane lacquer | "Gitterschnitt" value | "Gitterschnitt' value cross-cut |
| I distance spray gun-substrate 0.3 m; pressure in spray gun 0.3 mega-pascal; temperature surface 20°C; curing lacquer 30 min. at 80°C | 5×Gt0 | 5×Gt0 |
| II distance spray gun-substrate 0.6 m; pressure in spray gun 0.6 mega-pascal; temperature surface 20°C; curing lacquer 30 min. at 80°C | 1×Gt0 3×Gt2 1×Gt4 | 5×Gt0 |
| III distance spray gun-substrate 0.6 m; pressure in spray gun 0.6 mega-pascal; temperature surface 35°C; curing lacquer 30 min. at 80°C | 5×Gt4 | 5×Gt0 |
| Properties after painting according to II. "Falling dart impact strength" (J) | 10 | 50 |

It may be seen from Table VII that sample B according to the invention shows a better or equal bonding with polyurethane lacquer than sample A (reference sample).


Example III.
Three polymer mixtures were manufactured with the composition as stated hereinafter in Table VIII.

TABLE VIII

| | (Compositions in parts by weight) | | |
|---|---|---|---|
| Sample | D | E | F |
| poly(2,6-dimethyl-1,4-phenylene ether) | 32 | 32 | 32 |
| high-impact polystyrene | 64 | 64 | 64 |
| ZnO+ZnS | 0.3 | 0.3 | 0.3 |
| organic phosphite | 0.9 | 0.9 | 0.9 |
| block copolymer[1] | 5 | 5 | 5 |
| epoxy compound[2] | — | 3 | 6 |

[1] and [2]: In this example the same blockcopolymer and the same epoxy compound were used as indicated in Example I, Table I.


Standardized rods for a tensile test were manufactured from the resulting polymer mixtures by injection moulding. A PVC foil was adhered to the rods by means of a polyurethane adhesive, namely a two-components polyurethane adhesive of the tradename "Hernerts 7550". The glued joint was heated at 80°C for 5 minutes. After 5 days the peel resistance was determined. The results are recorded in Table IX hereinafter.

### TABLE IX

| Sample | D | E | F |
|---|---|---|---|
| Average peel resistance (three measurements) N/mm | 2.8±0.05[a] | 3.6±0.1[a] | 3.7±0.1[a] |

[a] Standard deviation.

Example IV.

A large number of tensile test bars were formed (injection moulded) from each of the polymer mixtures according to samples A, B and C of Example I. Always two rods from the same polymer mixture were bonded together with an overlap of 1 cm by means of a polyurethane adhesive or an epoxy adhesive. The adhesive was cured, partly at 20°C and partly at 80°C (60 minutes) and partly at 120°C (60 minutes). Two different polyurethane adhesives and one epoxy adhesive were used. Seven days after adhering the peel resistance was determined. Each test was repeated four times. The results obtained are recorded in Table X hereinafter.

### TABLE X
Peel resistance (N/mm$^2$) after curing at

| | 20°C | 80°C | 120°C |
|---|---|---|---|
| **Sample A** | | | |
| Adhesive I[5] | 3; 3; 3; 3 | 7; 7; 4; 4 | — |
| Adhesive II[6] | 1; <1; <1; <1 | 3; 2; 1; 1 | 6; 6; 5; 4 |
| Adhesive III[7] | 2; 2; 2; 1 | 2; 2; <1; <1 | — |
| **Sample B** | | | |
| Adhesive I[5] | 4; 3; 3; 2 | 7; 9; 3; 3 | — |
| Adhesive II[6] | 3; 2; 2; 2 | 4; 3; 3; 3 | 4×10 |
| Adhesive III[7] | 3; 3; 3; 2 | 8; 8; 8; 5 | — |
| **Sample C** | | | |
| Adhesive I[5] | 6; 5; 4; 4 | >10; 10; 9; 4 | — |
| Adhesive II[6] | 3; 3; 2; 2 | 6; 4; 4; 3 | 4×>10 |
| Adhesive III[7] | 3; 3; 2; 2 | 4; 4; 4; 2 | — |

[5] A two-components polyurethane adhesive commercially available under the trademark Bison from Perfekta.

[6] A two-components polyurethane adhesive commercially available under the trademark Macroplast UK 8210 from Henkel.

[7] A two-components epoxy adhesive commercially available under the indication "XB-7838 B/A from 3M Company.

It may be seen from the Table that the samples B and C according to the invention provide a better or equal peel resistance as compared with Sample A (not according to the invention).

Example V.

Polymer mixtures (samples G, H, J and K) were prepared in a composition as indicated in Table XI hereinafter. Injection moulding, lacquering and determination of bonding were carried out as stated in Example I. The results obtained are recorded in Table XII.

### TABLE XI

| Sample | (Composition parts by weight) | | | |
|---|---|---|---|---|
| | G | H | J | K |
| Poly(2,6-dimethyl-1,4-phenylene ether) | 44 | 44 | 44 | 44 |
| High-impact polystyrene | 56 | 56 | 56 | 56 |
| ZnO+ZnS | 0.3 | 0.3 | 0.3 | 0.3 |
| Organic phosphite | 0.8 | 0.8 | 0.8 | 0.8 |
| Block copolymer[1] | — | — | 6.5 | 6.5 |
| Epoxy compound[2] | — | 2.5 | — | 2.5 |

[1] and [2] see Table I.

TABLE XII

| | | "Gitterschnitt" value | | |
|---|---|---|---|---|
| Sample | G | H | J | K |
| I Distance spray gun-substrate 0.45 m; pressure in spray gun=0.6 MPa; temperature substrate=35°C; curing lacquer 75 minutes at 80°C | 4×Gt4 | 4×Gt0 | 4×Gt4 | 4×Gt0 |
| II Distance spray gun-substrate 0.6 m; pressure in spray gun=0.6 MPa; temperature substrate=20°C; curing 30 minutes at 120°C | 2×Gt4 | 2×Gt0 | 2×Gt0 | 2×Gt0 |
| III Distance spray gun-substrate 0.6 m; pressure in spray gun=0.6 MPa; temperature substrate=20°C; curing lacquer 30 minutes at 80°C | 3×Gt4 | 2×Gt4 1×Gt0 | 1×Gt4 2×Gt0 | 1×Gt4 2×Gt0 |

It appears from Table XII that under critical lacquer conditions the sample with the block copolymer shows a better or equal bonding than the reference sample, while the sample with only the epoxide compound shows a better bonding, and the sample with both the block copolymer and the epoxide compound shows the best bonding.

Example VI

Polymer mixtures were prepared having a composition as of sample A to which, however, 2.5 parts by weight of various epoxy compounds are added (Table XIII). The samples L, M, N and P were obtained in this manner (Table XIII). Injection moulding, lacquering and bonding determination were carried out as stated in Example I. The bonding found is recorded in Table XIV.

TABLE XIII

| | (Composition parts by weight) | | | | |
|---|---|---|---|---|---|
| Sample | A | L | M | N | P |
| Epoxy compound: | | | | | |
| Edenol B 35[8] | — | 2.5 | — | — | — |
| Edenol D 81[9] | — | — | 2.5 | — | — |
| Edenol B 316[10] | — | — | — | 2.5 | — |
| ERL 4221[11] | — | — | — | — | 2.5 |

[18] Edenol B 35 is an isoalkyl epoxystearate of Henkel
[9] Edenol D 81 is an epoxidized soya bean oil of Henkel
[10] Edenol B 316 is an epoxidized linseed oil of Henkel
[12] ERL 4221 is 3,4-epoxycyclohexylmethyl-3,4-epoxycyclohexyl carboxylate and is marketed by Union Carbide Corporation under the tradename Bakelite Cycloaliphatic Epoxy Resin ERL 4221

TABLE XIV

| Sample | "Gitterschnitt" value | | | | |
|---|---|---|---|---|---|
| | A | L | M | N | P |
| I Distance spray gun-substrate =0.6 m; pressure in spray gun=0.6 MPa; temperature substrate=35°C; curing lacquer 30 minutes at 80°C. | 3×Gt4 | 3×Gt0 | 3×Gt0 | 3×Gt0 | 3×Gt0 |
| II Distance spray gun-substrate =0.6 m; pressure in spray gun=0.6 MPa; temperature substrate=35°C; curing lacquer 30 minutes at 120°C. | 3×Gt4 | 2×Gt0 1×Gt2 | 3×Gt0 | 2×Gt0 1×Gt2 | 3×Gt0 |

Example VII.

Test plates were manufactured from polymer mixtures according to samples A and C of Example I. The samples were lacquered by spraying with two different alkyd/melamine lacquers. The conditions during lacquering and the found bonding results are recorded in Table XV hereinafter.

TABLE XV

| Sample | "Gitterschnitt" value | |
|---|---|---|
| | A | C |
| Conditions during lacquering<br>— distance spray gun-substrate 0.3 m.<br>— pressure in spray gun 0.3 MPa<br>— temperature substrate 20°C<br>— curing lacquer 30 minutes at 80°C | | |
| Lacquer III[12] | 2×Gt4; 1×Gt0 | 3×Gt0 |
| Lacquer IV[13] | 3×Gt4 | 3×Gt4 |
| Conditions during lacquering as above, but:<br>— curing lacquer 30 minutes at 120°C | | |
| Lacquer III[12] | 3×Gt4 | 3×Gt0 |
| Lacquer IV[13] | 3×Gt4 | 2×Gt4; |
| Conditions during lacquering<br>— distance spray gun-substrate 0.6 m<br>— pressure in spray gun 0.6 MPa<br>— temperature substrate 20°C<br>— curing 80°C | | |
| Lacquer III[12] | 3×Gt4 | 3×Gt0 |
| Lacquer IV[13] | 3×Gt4 | 3×Gt4 |
| Conditions as above, but:<br>— curing 120°C | | |
| Lacquer III[12] | 3×Gt4 | 3×Gt4 |
| Lacquer IV[13] | 3×Gt4 | 3×Gt4 |

[12] An alkyd/melamine paint having a rather high carboxyl value, obtainable under indication C3E577 from Schaepman Lakfabrieken.

[13] An alkyd/melamine paint (code C4E34) having a free inorganic acid (code H4E15) of Schaepman Lakfabrieken.

It may be seen from the results recorded in Table XV that a better or equal bonding is obtained with a polymer mixture according to the invention B than with polymer mixture A (reference sample).

## Claims

1. An article manufactured from a polymer mixture comprising a polyphenylene ether, optionally a polystyrene or a rubber-modified polystyrene and comprising a lacquer layer or an adhesive, characterized in that the article is manufactured from a polymer mixture which comprises a polyphenylene ether and an epoxy compound.

2. An article as claimed in Claim 1, characterized in that the article is manufactured from a polymer mixture which comprises in addition a saturated or unsaturated block copolymer having blocks derived from a conjugated diene and from a vinyl aromatic compound.

3. An article as claimed in Claims 1—2, characterized in that the article is manufactured from a polymer mixture which, calculated with respect to the overall quantity of polyphenylene ether, optionally present polystyrene or rubber-modified polystyrene, optionally present block copolymer, comprises 0.2 to 7.5% by weight of epoxy compound and 0 to 25% by weight of block copolymer.

4. An article as claimed in Claims 1—3, characterized in that the article is manufactured from a polymer mixture which comprises an epoxy compound having a molecular weight of more than 1,000.

5. An article as claimed in Claims 1—4, characterized in that the article is manufactured from a polymer mixture which comprises a block copolymer having blocks derived from butadiene and from styrene the polybutadiene blocks of which may be fully or partly hydrogenated.

6. An article as claimed in Claims 1—5, characterized in that the article has a polyurethane- or alkyd/melamine lacquer layer or a polyurethane- or epoxy adhesive layer.

## Patentansprüche

1. Gegenstand der aus einer Polymerischung hergestellt ist, welche ein Polyphenylenäther, gegebenenfalls ein Polystyrol oder ein gummi-modifiziertes Polystyrol enthält und der weiterhin eine Lackschicht oder eine Klebstoffschicht aufweist, dadurch gekennzeichnet, daß der Gegenstand aus einer Polymermischung hergestellt ist, die einen Polyphenylenäther und eine Epoxy-Verbindung enthält.

2. Gegenstand nach Anspruch 1, dadurch gekennzeichnet, daß er aus einer Polymermischung hergestellt ist, die zusätzlich ein gesättigtes oder ungesättigtes Blockcopolymer mit Blöcken aufweist, die von einem konjugierten Dien und von einer vinylaromatischen Verbindung abgeleitet sind.

3. Gegenstand nach den Ansprüchen 1 bis 2, dadurch gekennzeichnet, daß er aus einer Polymermischung hergestellt ist, die berechnet auf die Gesamtmenge an Polyphenylenäther, gegebenenfalls vorhandenes Polyphenylenäther, gegebenenfalls vorhandenes Polystyrol oder gummi-modifiziertes Polystyrol, gegebenenfalls vorhandenes Blockcopolymer, 0,2 bis 7,5 Gew.-% Epoxy-Verbindung und 0 bis 25 Gew.-% Blockcopolymer enthält.

4. Gegenstand nach den Ansprüchen 1 bis 3, dadurch gekennzeichnet, daß er aus einer Polymermischung hergestellt ist, die eine Epoxy-Verbindung mit einem Molekulargewicht von mehr als 1000 aufweist.

5. Gegenstand nach den Ansprüchen 1 bis 4, dadurch gekennzeichnet, daß er aus einer Polymermischung hergestellt ist, die ein Blockcopolymer mit Blöcken enthält, die von Butadien und von Styrol abgeleitet sind und wovon die Polybutadienblöcke vollständig oder teilweise hydriert sein können.

6. Gegenstand nach den Ansprüchen 1 bis 5, dadurch gekennzeichnet, daß er eine Polyurethan- oder Alkyd/Melamin-Lackschicht oder eine Polyurethan- oder Epoxy-Klebstoffschicht aufweist.

## Revendications

1. Objet fabriqué à partir d'un mélange de polymères comprenant un poly(oxyphénylène), éventuellement un polystyrène ou un polystyrène modifié au caoutchouc et comprenant une couche de laque ou un adhésif, caractérisé en ce que l'objet est fabriqué à partir d'un mélange de polymères qui comprend un poly(oxyphénylène) et un composé époxy.

2. Objet selon la revendication 1, caractérisé en ce que l'objet est fabriqué à partir d'un mélange de polymères qui comprend en plus un copolymère séquencé saturé ou insaturé ayant des séquences dérivés d'un diène conjugué et d'un composé vinyl aromatique.

3. Objet selon les revendications 1—2, caractérisé en ce que l'objet est fabriqué à partir d'un mélange de polymères qui, calculé par rapport à la quantité totale de poly(oxyphénylène), de polystyrène ou de polystyrène modifié au caoutchouc éventuellement présent, de copolymère séquencé éventuellement présent, comprend de 0,2 à 7,5 pourcent en poids de composé époxy et de 0 à 25 pourcent en poids de copolymère séquencé.

4. Objet selon les revendications 1—3, caractérisé en ce que l'objet est fabriqué à partir d'un mélange de polymères qui comprend un composé époxy ayant une masse molaire supérieure à 1000.

5. Objet selon les revendications 1—4, caractérisé en ce que l'objet est fabriqué à partir d'un mélange de polymères qui comprend un polymère séquencé ayant des séquences dérivées du butadiène et du styrène, dont les séquences polybutadiène peuvent être complètement ou partiellement hydrogénées.

6. Objet selon les revendications 1—5, caractérisé en ce que l'objet porte une couche de laque de polyuréthanne ou de résine alkyde/mélamine ou une couche d'adhésif de polyuréthanne ou de résine époxy.